Europäisches Patentamt

(19) European Patent Office

Office européen des brevets

(11) Publication number: **0 224 454**
**B1**

(12) **EUROPEAN PATENT SPECIFICATION**

(45) Date of publication of patent specification: **23.05.90**

(21) Application number: **86830352.0**

(22) Date of filing: **21.11.86**

(51) Int. Cl.⁵: **B 60 K 41/02, B 60 K 23/02**

(54) An electromechanical device for manual control of a clutch in a motor vehicle.

(30) Priority: **22.11.85 IT 2296585**

(43) Date of publication of application:
**03.06.87 Bulletin 87/23**

(45) Publication of the grant of the patent:
**23.05.90 Bulletin 90/21**

(84) Designated Contracting States:
**AT BE CH DE ES FR GB GR IT LI LU NL SE**

(56) References cited:
**EP-A-0 049 535**
**EP-A-0 092 950**

(73) Proprietor: **LINEA GUIDA S.r.l.**
**Via Grazia, 4**
**I-27010 Albuzzano (IT)**

(72) Inventor: **Gianini, Bruno**
**Via Grazia, 4**
**I-27010 Albuzzano (Pavia (IT)**

(74) Representative: **Bianchetti, Giuseppe**
**Studio Consulenza Brevettuale Via Rossini, 8**
**I-20122 Milan (IT)**

# Description

This invention relates to an electromechanical device for manual control of a clutch in a motor vehicle, particularly for use in motorcars adapted to persons being unable to make use of their legs.

Devices for manually controlling operation of a clutch are already known.

They are, in general, of an electropneumatic type and considerably complicated and expensive.

These known devices include, in fact, a pneumatic buffer tank provided with a central flexible membrane that divides it into two cavities.

Secured to the membrane is a pin that extends out of one tank cavity and to which a wire is hooked, the wire running to the clutch pedal or directly to the "clutch device". Connected to the other tank cavity is a pipe leading from the induction manifold of an engine, in which pipe an electro-valve is interposed and is operated by a control switch.

Disengagement of the clutch is obtained by creating a depression in the cavity having the pipe connected thereto, which results in the flexible membrane being drawn back; engagement of the clutch is obtained by a reverse operation.

A disadvantage in these known devices is that the time for the membrane to regain its "rest" position, that is the time for the clutch to be engaged, must be set in advance, so that no further regulation can be made thereto during operation which gives rise to very great problems especially in relation with the different types of starting involved.

It is to be noted, among other things, that the above-mentioned pneumatic buffer tank is, in an attempt to save the device, connected to a similar tank associated to the "servo brake", so that the respective membranes are in a close relationship with one another, in this sense that should one of the two membrane be punctured, both the clutch and brake controls will be put out of use.

EP-A-049535 discloses an automatic control system for operating the clutch of a car, attacheable to manual cars to enable them to function as automatic, as per the preamble of claim 1.

According to a first embodiment, the clutch is manually operated by activating a push button, while according to a second embodiment, the clutch is automatically operated by the accelerating pedal.

There is no provisions for operating the clutch pedal both automatically and manually in dependence of the speed of the vehicle.

It is the object of this invention to overcome the above problems by providing an electromechanical device for manual control of a clutch which is simple and inexpensive as much as it is efficient in operation.

A device according to the invention is characterized in that it includes a gearmotor carrying at the end of an associated shaft a pulley or a steel wire for winding on, or unwinding from it a belt, the belt running on a deflecting wheel and being attached at its free end to a clutch pedal or directly to the clutch device, the arrangement being such that by applying electric control signals to the gearmotor for rotation thereof, there is obtained, through winding or unwinding of that belt, the disengagement or engagement of the clutch, respectively. An electric circuit, comprising in particular microswitches operating the stop of the winding and of the feeding out of the belt, and then the clutch pedal descent or raise, is connected with the device according to the invention.

Command signals for the gearmotor to rotate may be applied either manually, for example, via a push-button or a key arranged, for example, on a gearshift lever, or automatically through a microswitch operated by the gas pedal, which microswitch only operates at low speeds, for example, not exceeding a 25 km/h speed. In this respect, a further microswitch is provided and is effective to act when the vehicle reaches the above-specified speed to switch off the microswitch operated by the accelerator pedal.

By means of the device of the invention, the ascent rate of the clutch pedal, in case of automatic operation, may be differentiated, by decreasing it in proximity to the engage or skid point, to achieve a smooth start.

Further features and advantages of the device for manual control of a clutch according to the invention will appear from the following detailed description of one embodiment thereof shown by way of a non limiting example by the accompanying drawings, in which:

Figure 1 is an axonometric schematic view of the basic components of a device according to the invention, arranged to control a clutch pedal;

Figures 2, 3 and 4 are schematic plan views taken from an opposite side to that in Fig. 1, showing the device when commencing the step of winding the belt, when stopping the belt winding, and when stopping the belt feeding out, respectively;

Figures 5 and 6 schematically show a power circuit and a control circuit for the device according to the invention;

Figure 7 is an axonometric schematic view of a centrifugal device for actuating an associated microswitch as a function of the speed of the vehicle;

Figure 8 is a schematical sectional view taken on the line VIII-VIII in Fig. 7; and

Figure 9 is a schematic view taken on the line IX-IX in Fig. 8.

Figures 10 and 11 schematically show a convenient lay-out of some microswitches constituting the electrical circuit connected with the device according to the invention.

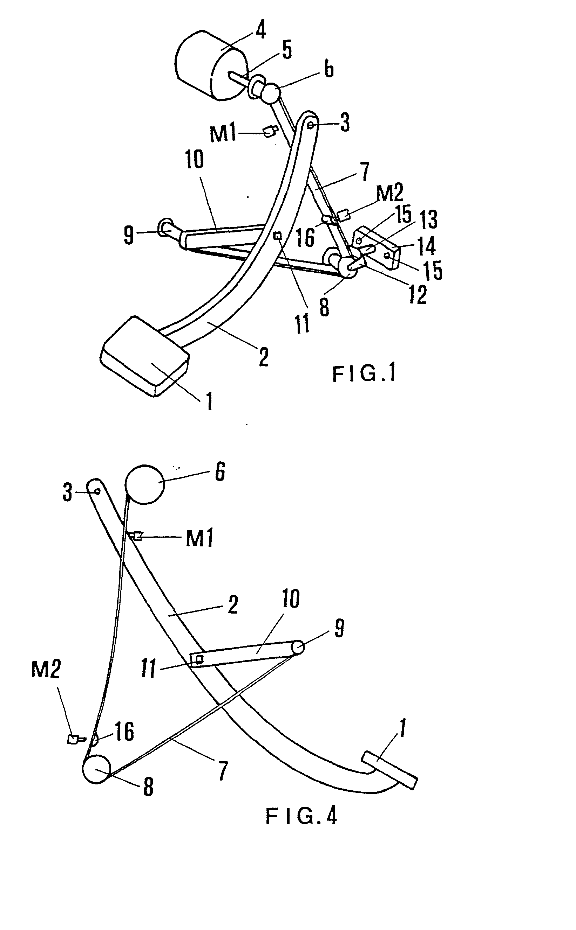

Referring now to Figures 1 to 4 of the drawings, the numeral 1 designates a clutch pedal or a motor vehicle, in particular an automobile, the clutch pedal being carried by a lever 2 which can, in a manner known per se, swing about a pivotal axis 3.

The clutch pedal shown herein is for use in an ordinary type of motor vehicle so that it is to be intended that each time after the pedal has been depressed it tends to return to its rest position shown in Fig. 1, although the associated return means are not illustrated in the drawings.

Providing in proximity of the pedal 1 is an electric gearmotor 4 which is secured by known means to the body of a motor vehicle. A pulley 6 is carried at the outer end of a shaft 5 extending out of gearmotor 4 and a belt or a steel wire 7 is arranged for winding around the pulley 6. Hereinafter, for the sake of simplicity, reference will be made only to a belt although it is advantageous to use a steel wire, because of its strength. The belt runs on a deflecting wheel 8 and is secured at its end to a lever 2 of a clutch pedal. More specifically, in the embodiment shown in the drawings, the belt 7 is attached at its end to a pivot 9 carried on a rod member 10 extending forwardly of the lever 2 and rigidly secured thereto, for example, by means of a bolt 11. The belt-deflecting wheel or pulley 8 is supported by the branches of a fork member 12 which is provided at the rear with a pin 13. This pin 13 is secured in a manner enabling it to rotate about its own axis to a plate 14 which is in turn secured to the car body, for example, by the aid of screws 15.

The fact of the pin 13 being capable of rotation makes for the wheel 8 to be self-centering in character in this sense that it can take the most suitable orientation for deflecting the belt 7 from the pulley 6 to the pin 9, taking into account that it is difficult to arrange for these elements to be in an aligned relationship with one another. Of course, the arrangement of the above described elements may be different from that above described, without changing thereby the operation of the device, which will be hereinafter illustrated.

Provided at locations between the pulley 6 and the deflecting wheel 8, in proximity to the belt 7 and with preference on opposite sides thereof, are respective microswitches indicated at M1 and M2.

The microswitch M1 is located in proximity to the pulley 6 preferably on the internal side of belt 7 (the side directed towards the pivot 9). This microswitch M1 is normally spaced from the belt 7 and is actuated through action of a pawl means 16 carried on the inwardly directed side of said belt and arranged to stop the winding of belt 7, namely the descent of pedal 1, as will be better explained herein after.

The pawl 16, during operation of the device, does not project out of the zone between the pulley 6 and the deflecting roller 8, and can be adjusted in position on the belt 7 thereby to adjust the stroke of the clutch pedal, as will also be explained further herein below.

As an alternative and in a convenient manner, the pawl 16 may be arranged on the lever 2 of the clutch pedal and the limit microswitch M1 may be located so as to be in a most suitable position to cooperate therewith.

The microswitch M2 is arranged on the opposite side to the microswitch M1 with respect to the belt 7, preferably in proximity to the deflecting wheel 8, and is normally in contact with the belt 7 which belt, during operation of the device, is in a tensioned state.

Before describing operation of the device according to the invention, it is to be noted that this device can be arranged, without any significant modification, to act directly on a clutch device, rather than on a pedal thereof as shown by way of example in the annexed drawings.

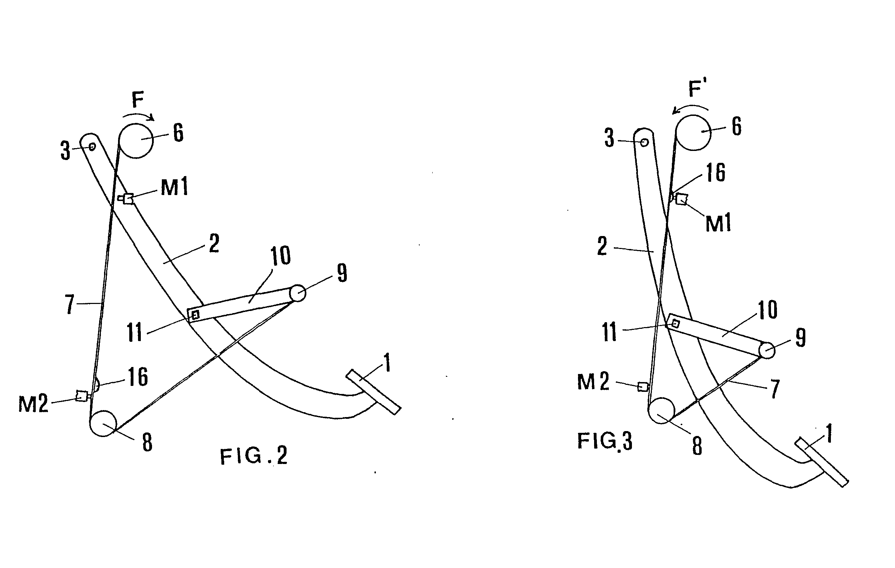

Operation of the device of the invention will now be described in relation to Figures 2, 3 and 4.

Figure 2 shows the position of the mechanism immediately after that a command signal has been applied for causing the pulley 6 to rotate in a belt-winding direction as shown by the arrow F, Fig. 2.

For this position, and during the entire belt-winding step, the microswitch M2 remains in contact with the belt 7 which is in tension, while the microswitch M1 is spaced from the belt.

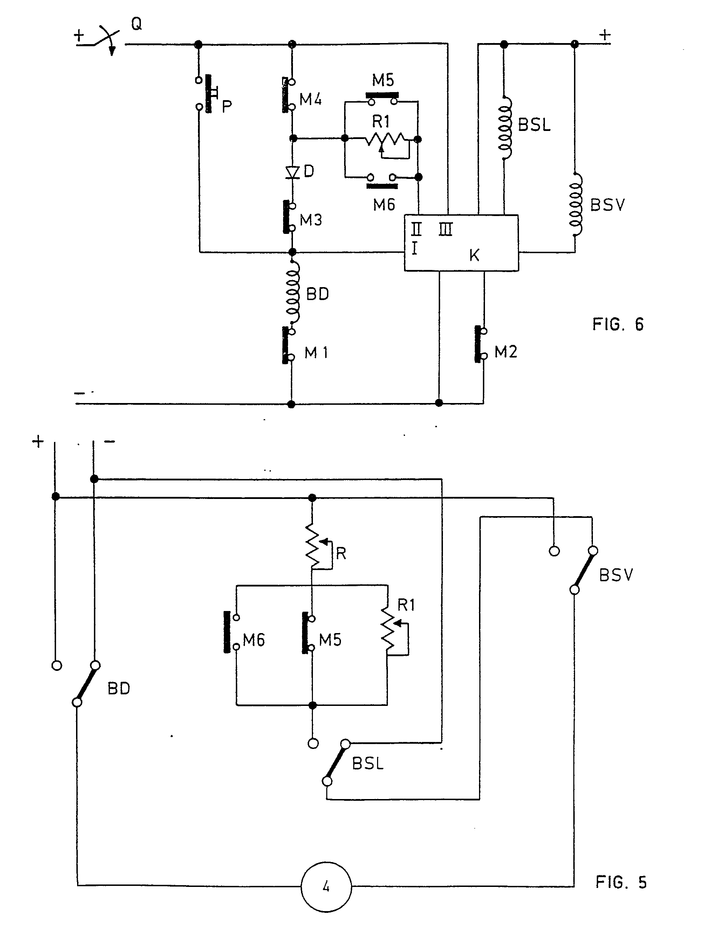

Winding of the belt 7, as obtained by rotation of pulley 6, causes the pedal 1 to be depressed until the pawl 16 carried by the belt, or the clutch lever 2, will actuate the microswitch M1 thereby to stop belt winding, as shown in Fig. 3.

At this time, a reverse command signal to that applied before, causes the pulley 6 to rotate in a reverse direction (see arrow F', Fig. 3) and, thus, the belt 7 to be unwound or fed-out under action of return means (not shown) for the pedal 1.

During the feeding-out step, the belt 7 is also in a tensioned state and is kept in contact with the microswitch M2 and spaced from the microswitch M1.

At the end of the return stroke of pedal 1 (Fig. 4) the belt 7 becomes untensioned and moves out of contact with the microswitch M2, whereupon this microswitch stops the belt feeding-out steep. Thus, a new cycle can be started again.

The amount by which the pedal 1 is lowered or depressed may be adjusted by moving the microswitch M1-actuating pawl 16 along the belt 7, or the clutch pedal, if the pawl 16 is carried on this latter.

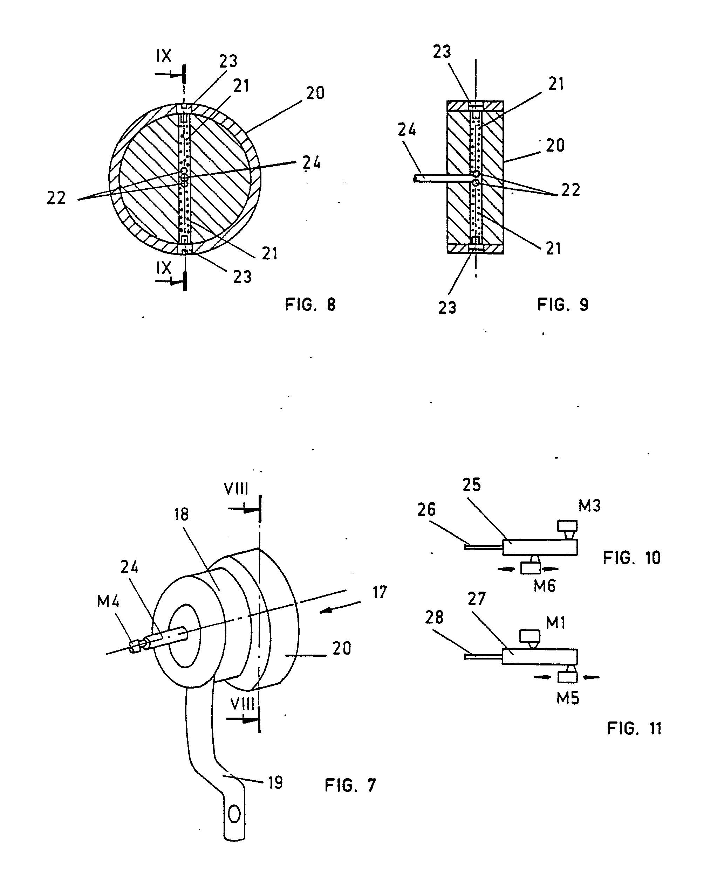

Of course, the arrangement of the microswitches M1 and M2 may be changed in respect to that shown in Figures 1—4 given by way of an example, and in order to make the description easier. Thus, for instance, it has been found that the microswitch M2 stopping the feeding-out may be conveniently inserted directly into the gearmotor 4, while the microswitch M1 stopping the winding may be operated by a wire connected to the clutch pedal, as it will be disclosed in more detail hereinafter with reference to Fig. 11.

Now, the various types of command signals that can be applied to gearmotor 4 for operation of the device according to the invention will be discussed with particular reference to Figures 5—11.

In this respect it is noted that the diagram in Fig 6, to be described more in detail in the following — in addition to the already discussed limit microswitches M1 and M2, also includes, for example, on a gearshift lever of a vehicle, a microswitch M3 operated by the accelerator pedal; a microswitch M4 associated to a centrifugal device or by an electromagnetic sensing device, which, when the vehicle exceeds a set speed of, for example, 25 km/h, disables the microswitch M3; a microswitch M5 operated by the clutch pedal inserting a resistance, or more precisely a rheostat, R, to decrease the ascent rate; a microswitch M6 operated by the accelerator pedal which, in case of sharp acceleration, switches off the microswitch M5.

The microswitches M5 and M6 are also reported in the power circuit of Fig. 5.

The push-button P is used for effecting shifting operations, while the microswitch M3 is to cause the clutch pedal 1 to automatically ascend during acceleration — when driving the vehicle at low speed 8 so that it is of utility especially during starting or manoeuvring process. In the case of operation through M3, the ascent rate of the pedal 1 may be differentiated.

Figures 9 and 10 schematically show the position of microswitches M3 and M6 operated by a cursor 25 connected by a wire 26 to the accelerator pedal, and respectively the position of microswitches M1 and M5 operated by a cursor 27 connected by a wire 28 to the clutch pedal 1.

The positions of the cursors 27 and 25 in Figure 10 and 11 correspond to the rest conditions, i.e. with the clutch and accelerator pedals raised. Depressing the driving pedals, said cursors move to the left, always with reference to Figures 10 and 11.

At least microswitches M5 and M6 may be adjusted in position, as shown by the arrows, to adjust the respective operation points thereof. The two couples of microswitches M3, M6 and M1, M5 are conveniently inserted in one or two separated small boxes, placed in the most suitable place of the car, with electrical connections to the electric box or electronic circuit K, which will be hereinafter referred to.

Before describing the control signals that can be applied to gearmotor 4, together with the operation of the electric circuit shown in Figures 5 and 6, there will be briefly explained, in relation to Figures 7—9, a centrifugal device associated to the microswitch M4 and generally indicated by reference numeral 17 in said Figures.

This centrifugal device 17 comprised a fixed part 18 that is attached to the structure of the vehicle by means of a holder means 19, and a cylinder part 20 to which rotation may be transmitted from an axle shaft or the main shaft of the car.

Arranged inside the cylinder part 20 are two mutually facing springs 21 which act to urge associated balls 22 towards a central position. Screws 23 are provided for adjusting the load applied by springs 21 on balls 22.

A spindle 24 is arranged axially of the centrifugal device 17 and is effective for actuating the microswitch M4 (Fig. 7).

When at rest, or with the vehicle driven at lower speed than the set speed, which may, for example, be of the order of 25 km/h, the balls 22 are in contact with one another (Fig. 8) and the spindle or pin 24 closes the microswitch M4.

Upon exceeding said speed, the centrifugal force exerted on balls 22 overcomes the force of springs 21 thus causing the balls to move away from one another and the spindle 24 to engage inbetween by its internal end (Fig. 8) the pin 24 being also urged in that direction by the contact spring of microswitch M4 which will, thus, open.

The microswitch M4 is therefore operative depending on the speed of the vehicle and, when this speed exceeds the set speed, it also causes the microswitch M3 to be disconnected.

Obviously, the speed at which the microswitch M4 is operative may be regulated by adjusting the screws 23 which apply a load on the associated springs 21.

As a matter of fact, in place of the centrifugal device 17, any other suitable means may be used which utilizes the driving speed of the vehicle (or possibly the engine rpm) such, for example, as previously cited, as an electromagnetic type of device that is keyed on the transmission shaft for operating the microswitch M4.

Now a description will be given of the control signals that can be applied to gearmotor 4 for operating the clutch pedal 1.

With the vehicle being stationary, switching-on the dash board will cause the clutch pedal to be depressed automatically, with the engine being able to be ignited even if the gear is engaged. When accelerating, the microswitch M3 operated by the accelerator pedal causes the clutch pedal to be raised slowly. The rate of slow ascent of the clutch pedal can be regulated by means of a rheostat R shown schematically in Fig. 5. In this case, reference is made to slow ascent of the clutch pedal in order to distinguish from the ascent, usually faster, occurring during gearshift, as it will be hereinafter described. It is however evident that, arranging the rheostat R in the position of zero resistance, an analogously fast ascent occurs.

When the clutch pedal reaches the position corresponding to the engage point, or skidding point, the microswitch M5 activating the rheostat R1 and decreasing the ascent rate, is activated, obtaining a starting or, anyhow, a smooth manoevre.

On the contrary, accelerating sharply, the microswitch M6 is operated, excluding M5 and eliminating the slowing in the ascent final phase of the clutch pedal, obtaining thereby a sharp starting.

This possibility, even if it could seem poorly suitable, is justified by the fact that many users prefer a sport-like drivemen, and above all because the device according to the invention may be applied also on racing cars for disabled people.

Therefore, as long as the vehicle is running at a lower speed than 25 km/h (the set speed) the clutch pedal will automatically be depressed as the accelerator pedal is raised, and it goes up slowly when accelerating. Upon exceeding 25 km/h, the microswitch M4 disables the microswitch M3, so that control signals may be applied to the clutch pedal for effecting shifting operations only through push-button P.

Thus, depressing the push-button P causes the clutch pedal to descend; a shifting operation may then be performed and, by releasing (or depressing still further) the button P a rapid ascent of the clutch pedal is obtained. Disconnection of the microswitch M3 by means of microswitch M4 enables to take advantage of the engine brake of the vehicle, for example when going downhill. By switching off the dashboard, the clutch pedal will be raised automatically, so that the associated spring does not remain in compressed condition during parking.

Provided in the interior of vehicle may be warning lights indicating the position of the clutch pedal.

Operation of the device as described above may be further considered in relation to the diagrams in Figures 5 and 6 given by way of example only.

In diagram of Fig. 5, reference signs + and − indicate the polarities of the battery supplying the circuit connected to the gearmotor 4; BD, BSL and BSV are the descent, slow ascent and rapid ascent of the clutch pedal, the coils being shown in diagram Fig. 6.

Turning to Fig. 5, shown therein is the rheostat R enabling the "slow" ascent of the clutch pedal to be regulated, as well as the microswitches M5 and M6 and the rheostat R1, which, when activated, decreases the ascent rate of the clutch pedal at the engage point.

The diagram in Fig. 6 which includes an electronic circuit indicated as block K, shows the microswitches M1, M2, M3, M4, M5 and M6 with a diode D interposed between M3 and M4, the push-button P, the rheostat R1, the three coils BD, BSL and BSV, as well as the respective connections with block K.

Also shown in this diagram are the polarities of the battery and a switch Q indicating, when in closed position, that the dashboard of the car is on.

The position of the various switches in Fig. 6 is that corresponding to a rest condition, with M5 shown already in a closing circuit.

By switching-on the dashboard — namely by closing the switch Q — a voltage is applied to III of electronic circuit K, to II through M4, and to I through M3; the "descent" coil BD is energized and causes the clutch pedal 1 to be depressed. When the clutch is completely depressed (Fig. 3, 11) the limit microswitch M1 opens and the coil BD is de-energized.

When accelerating, the microswitch M3 opens (Fig. 10) to remove voltage from the coil BD and the point I. Under these conditions, there is full voltage at II and III which causes energization of the coil BSL controlling the "slow ascent", so that the clutch pedal starts to raise.

When the engage or skidding point is achieved, the microswitch M5 is activated which, opening, inserts rheostat R1, decreasing the voltage at point II, whereby the clutch pedal raises more slowly. In this case, a smooth starting is obtained.

When the clutch pedal is completely raised (Fig. 4) the limit microswitch M2 opens to de-energize the coil BSL.

If, during the just described operation, the accelerator pedal is completely depressed, in addition to microswitch M3, also microswitch M6 (Fig. 10) is activated, which, closing, disconnects M5 and therefore the rheostat R1, eliminating the slowing of the final phase of the clutch pedal ascent, obtaining therefore a sharp starting. The microswitch M6 normally is activated at about 2000 rpm, but it may be adjusted in position to operate at a different rpm value, for instance 3000-4000 to obtain power starts.

The microswitch M4 remains in a closed position as long as the speed of the vehicle is less than 25 km/h, whereafter it opens to disconnect the microswitch M3 and, of course, also M5 and M6. Thus, as long as the push-button P is undepressed the clutch is always engaged and the vehicle may make use of the engine brake.

In order to perform a shifting operation, the push-button P is depressed to apply a voltage to the coil BD which causes the clutch pedal to move down until the limit microswitch M1 becomes operative, as described herein before. After the gear has been engaged, the push-button P is released to remove voltage from I. If the vehicle, upon releasing P, is running at a higher speed than 25 km/h speed, the microswitch M4 is off, no voltage exists at II so that the clutch pedal will go up rapidly — as controlled by BSV - to obtain a fast shifting. If, upon releasing P, the speed of vehicle is less than 25 km/h, the contact M4 is closed, a voltage exists at II, and the clutch - as controlled by BSL — will go up slowly to obtain a smooth or sharp operation, according to the acceleration mode. When the clutch pedal is completely up, the limit switch M2 opens to de-energize the coil BSV (or BSL).

Switching off the dashboard, that is opening the switch Q, removes voltage from I, II and III to cause fast ascent of the clutch pedal which is brought to a rest condition.

Instead of push-button P being arranged on the gearshift lever, it may be arranged on the brake lever or on both said elements, with possibility of selective operation.

## Claims

1. An electromechanical device for manual control of a clutch in a motor vehicle, in particular for use in motorcars adapted to persons being unable to make use of their legs, the device being associated to an electric circuit supplied from the battery of the motor vehicle, and connected to at least one manually operated control switch or push-button (P), characterized in that said device comprises a gearmotor (4) driving a pulley (6) around which a belt or steel wire (7) is partially wound, the belt (7) running on a deflecting wheel (8) and being attached at its end to the clutch of the motor vehicle, the arrangement being such that rotation of the gearmotor (4) and, thus, of the pulley (6), in one or the other direction causes the clutch to be disengaged or engaged respectively, the control signals for rotation of the gearmotor (4) being applied automatically thereto when the vehicle is running at a lower speed than a set threshold speed, and being transmitted manually thereto, by depressing said push-button (P), when exceeding said threshold speed.

2. The device according to claim 1, wherein the belt (7) controls the clutch device directly.

3. The device according to claim 1, wherein the belt (7) has its end attached to a pivot (9) carried by the lever (2) of the clutch pedal (1) thereby to cause movement of this latter.

4. The device according to claims 1 and 3, wherein the deflecting wheel (8) is supported by a fork (12) carrying on its opposite side a pivot (13) which is secured for rotation about its own axis to a support plate (14), in such a manner that the wheel (8) is enabled to take the most suitably oriented direction for deflecting the belt (7) from the pulley (6) towards the pivot (9) which are normally out of alignment.

5. Device according to any one of claims 1—4, characterized in that said electric circuit connected thereto, comprises, in addition to said pulsant (P), two limit microswitches (M1) and (M2), suited to operate, respectively, the stop of the winding and feeding-out the belt or wire (7), i.e. the ascent or descent of the clutch pedal (1), a microswitch (M3) operating the slow ascent of the pedal (1) for running speeds slower than the pre-established threshold, a microswitch (M5) inserting a rheostat (R1) to decrease the ascent rate of the pedal (1), a microswitch (M6) excluding (M5) in the event of sharp accelerations, a microswitch (M4) excluding (M3) for running speeds faster than the pre-established treshold, three coils (BD), (BSL) and (BSV), respectively for the descent, the slow ascent and the fast ascent of the clutch pedal (1).

6. Device according to claim 5, characterized in that said microswitches (M1, M5) are operated by the clutch pedal (1), whereas said microswitches (M3, M6) are operated by the vehicle accelerator pedal.

7. Device according to claim 5, characterized in that said microswitch (M4) is operated by a centrifugal device or by an electromagnetic sensor (17) detecting the vehicle running.

8. Device according to claim 5, characterized in that said end-feeding microswitch (M2) is inserted into the gearmotor (4) or is positioned so as to cooperate with the belt or wire (7).

9. Device according to any one of the preceeding claims, characterized in that inserting the vehicle dashboard (Q) the automatic descent of the clutch pedal (1) is caused.

10. Device according to claim 5, characterized in that said slow ascent of the clutch pedal (1), operated by microswitch (M3), is adjustable by means of a rheostat (R).

11. Device according to any one of the previous claims, characterized in that the energizing points of said microswitches (M1—M6) are adjustable.

**Patentansprüche**

1. Elektromechanische Vorrichtung zur Handbetätigung einer Kupplung in einem Kraftfahrzeug, insbesondere zur Verwendung in Automobilen, für Personen, die nicht in der Lage sind, ihre Beine zu bewegen, wobei die Vorrichtung mit einem von der Batterie des Kraftfahrzeuges gespeisten elektrischen Stromkreis verbunden und an wenigstens einen manuell zu betätigenden Steuerschalter oder Druckknopf (P) angeschlossen ist, dadurch gekennzeichnet, daß die Vorrichtung einen Getriebemotor (4) aufweist, der eine Rolle (6) antreibt, auf die ein Gurt oder Stahldraht (7) zum Teil aufgewickelt ist, wobei der Gurt (7) über eine Umlenkrolle (B) läuft und mit seinem Ende an der Kupplung des Kraftfahrzeuges befestigt ist, wobei die Anordnung derart ist, daß Drehungen des Getriebemotors (4), und damit der Rolle (6), in die eine oder andere Richtung die Kupplung aus- bzw. einrücken, wobei die Steuersignale zum Drehen des Getriebemotors (4) diesem automatisch zugeleitet werden, wenn das Fahrzeug mit geringerer Geschwindigkeit als eine bestimmte Schwellengeschwindigkeit fährt, und manuell durch Drücken des Druckknopfes (P) übertragen werden, wenn die Schwellengeschwindigkeit überschritten ist.

2. Vorrichtung nach Anspruch 1, dadurch gekennzeichnet, daß der Gurt (7) die Kupplungsvorrichtung direkt steuert.

3. Vorrichtung nach Anspruch 1, dadurch gekennzeichnet, daß das Ende des Gurtes (7) an einem Zapfen (9) angebracht ist, der sich an einem Hebel (2) des Kupplungspedales (1) befindet, um Bewegungen des letzteren zu verursachen.

4. Vorrichtung nach Anspruch 1 und 3, dadurch gekennzeichnet, daß die Umlenkrolle (8) an einer Gabel (12) angeordnet ist, an deren entgegengesetzten Seite ein Zapfen (13) angeordnet ist, der zum Drehen um seine eigene Achse an einer Stützplatte (14) befestigt ist, so daß die Umlenkrolle (8) die zum Umlenken des Gurtes (7) von der Rolle (6) zum Zapfen (9), die normalerweise nicht in Flucht liegen, geeignetste Lage einnehmen kann.

5. Vorrichtung nach einem der Ansprüche 1 bis 4, dadurch gekennzeichnet, daß der angeschlossene elektrische Stromkreis zusätzlich zu dem Druckknopf (p) zwei End-Mikroschalter (M1) und (M2) zum Beenden des Auf— bzw. Abwickelns des Gurtes oder Drahtes (7), d. h. des Anhebens oder Absenkens des Kupplungspedales (1), einen Mikroschalter (M3), der das langsame Anheben des Pedals (1) bei Fahrgeschwindigkeiten, die niedriger als die Schwellengeschwindigkeit sind, auslöst, einen Mikroschalter (M5), der einen Rheostat (R1) einschaltet, um die Anhebegeschwindigkeit des Pedals (1) zu vermindern, einen Mikroschalter (M6), der den Mikroschalter (M5) im Falle starker Beschleunigungen ausschaltet, einen Mikroschalter (M4), der den Mikroschalter (M3) zum Fahren mit Geschwindigkeiten, die höher als die Schwellengeschwindigkeit sind, und drei Spulen (BD), (BSL) und (BSV) für das Absenken, das langsame Anheben und das schnelle Anheben des Kupplungspedals (1) aufweist.

6. Vorrichtung nach Anspruch 5, dadurch gekennzeichnet, daß die Mikroschalter (M1, M5) durch das Kupplungspedal (1) betätigt werden, während die Mikroschalter (M3, M6) durch das Fahrzeuggaspedal betätigt werden.

7. Vorrichtung nach Anspruch 5, dadurch gekennzeichnet, daß der Mikroschalter (M4) durch eine Zentrifugalvorrichtung oder durch einen elektromagnetischen Sensor (17), welche die Geschwindigkeit des Fahrzeugs ermitteln, betätigt wird.

8. Vorrichtung nach Anspruch 5, dadurch gekennzeichnet, daß der Aufwickel-End-Mikroschalter (M2) in den Getriebsmotor (4) eingesetzt oder so angeordnet ist, daß er mit dem Gurt oder Draht (7) zusammenwirkt.

9. Vorrichtung nach einem der vorhergehenden Ansprüche, dadurch gekenzeichnet, daß durch Einschalten des Fahrzeugarmaturenbrettes (Q) das automatische Absenken des Kupplungspedales (1) verursacht wird.

10. Vorrichtung nach Anspruch 5, dadurch gekennzeichnet, daß das durch den Mikroschalter (M3) hervorgerufene langsame Anheben des Kupplungspedals (1) mittels des Rheostaten (R) einstellbar ist.

11. Vorrichtung nach einem der vorhergehenden Ansprüche, dadurch gekennzeichnet, daß die Erregungspunkte der Mikroschalter (M1 bis M6) einstellbar sind.

## Revendications

1. Un dispositif électromécanique pour la commande manuelle d'un embrayage d'un véhicule à moteur, destiné en particulier à être employé dans des automobiles adaptées aux personnes incapables de faire usage de leurs jambes, le dispositif étant associé à un circuit électrique alimenté à partir de la batterie du véhicule à moteur et connecté à au moins un interrupteur de commande actionné manuellement ou bouton-poussoir (P), caractérisé en ce que ledit dispositif comporte un moteur à engrenages (4) entraînant une poulie (6) autour de laquelle s'enroule partiellement une courroie ou un câble en acier (7), la courroie (7) circulant sur un galet de renvoi (8) et étant attachée à son extrémité à l'embrayage du véhicule à moteur, l'agencement étant tel que la rotation du moteur à engrenages (4) et donc de la poulie (6) dans un sens ou dans l'autre met en prise ou libère respectivement l'embrayage, les signaux de commande de la rotation du moteur à engrenages (4) lui étant automatiquement appliqués, lorsque le véhicule circule à une vitesse inférieure à un seuil de vitesse réglé et lui étant transmise manuellement, en appuyant sur ledit bouton poussoir (P) lorsque ledit seuil de vitesse est dépassé.

2. Dispositif selon la revendication 1, dans lequel la courroie (7) commande directement le dispositif à embrayage.

3. Dispositif selon la revendication 1, dans lequel la courroie (7) a son extrémité attachée à un pivot (9) porté par le levier (2) de la pédale d'embrayage (1) entraînant de la sorte le déplacement de cette dernière.

4. Dispositif selon les revendications 1 et 3, dans lequel le galet de renvoi (8) est supporté par une fourche (12) portant sur son côté opposé un tourillon (13) fixé pour être entraîné en rotation autour de son propre axe à une plaque support (14) de telle sorte que le galet (8) peut prendre l'orientation la plus appropriée pour faire dévier la courroie (7) depuis la poulie (6) vers le pivot (9) qui ne sont pas normalement alignés.

5. Dispositif selon l'une quelconque des revendications 1 à 4, caractérisé en ce que ledit circuit électrique qui lui est connecté comporte, en plus dudit poussoir (P), deux micro-rupteurs de fin de course (M1) et (M2) prévus pour actionner respectivement l'arrêt de l'enroulement et de l'avancement de la courroie ou du câble (7), c'est-à-dire la montée ou la descente de la pédale d'embrayage (1), un micro-rupteur (M3) actionnant la montée lente de la pédale (1) pour des vitesses de roulage inférieures au seuil pré-établi, un micro-rupteur (M5) insérant un rhéostat (R1) pour diminuer le taux de remontée de la pédale (1) un micro-rupteur (M6) neutralisant (M5) s'il se produit une brusque accélération, un micro-rupteur (M4) neutralisant (M3) pour des vitesses de roulage supérieures au seuil pré-établi, trois bobines (BD), (BSL) et (BSV) étant prévues respectivement pour la descente, la montée lente et la montée rapide de la pédale d'embrayage (1).

6. Dispositif, selon la revendication 5, caractérisé en ce que lesdits micro-rupteurs (M1, M5) sont actionnés par la pédale d'embrayage (1) alors que lesdits microrupteurs (M3, M6) sont actionnés par la pédale d'accélération du véhicule.

7. Dispositif selon la revendication 5, caractérisé en ce que ledit micro-rupteur (M4) est actionné par un dispositif centrifuge ou par un capteur électro-magnétique (17) qui détecte le roulage du véhicule.

8. Dispositif selon la revendication 5, caractérisé en ce que ledit micro-rupteur (M2) de fin d'avancement est inséré dans le moteur à engrenages (4) ou est positionné de manière à coopérer avec la courroie ou le câble (7).

9. Dispositif selon l'une quelconque des revendications précédentes, caractérisé en ce que l'activation du tableau de bord (Q) du véhicule entraîne la descente automatique de la pédale d'embrayage (1).

10. Dispositif selon la revendication 5, caractérisé, en ce que ladite montée lente de la pédale d'embrayage (1) actionnée par le micro-rupteur (M3) est réglable au moyen d'un rhéostat (R).

11. Dispositif selon l'une quelconque des revendications précédentes, caractérisé en ce que les points de mise sous tension desdits micro-rupteurs (M1 à M6) sont réglables.

FIG.1

FIG.4

FIG.3

FIG.2

FIG. 6

FIG. 5

3

EP 0 224 454 B1

FIG. 8

FIG. 9

FIG. 7

FIG. 10

FIG. 11